# EUROPÄISCHE PATENTSCHRIFT

(11) **EP 3 652 799 B1**
(45) Veröffentlichungstag und Bekanntmachung des Hinweises auf die Patenterteilung: **21.04.2021**
(21) Anmeldenummer: 18746847.5
(22) Anmeldetag: 09.07.2018
(51) Int. Cl.: H01M 8/0297, H01M 8/0258, H01M 8/0267, H01M 8/2483, H01M 8/0206, H01M 8/0221, H01M 8/0273

(54) **BIPOLARPLATTE FÜR EINE ELEKTROCHEMISCHE VORRICHTUNG**
BIPOLAR PLATE FOR AN ELECTROCHEMICAL DEVICE
PLAQUE BIPOLAIRE POUR DISPOSITIF ÉLECTROCHIMIQUE

(30) Priorität: 14.07.2017 DE 102017115873
(43) Veröffentlichungstag der Anmeldung: 20.05.2020
(73) Patentinhaber: ElringKlinger AG, 72581 Dettingen (DE)
(72) Erfinder: BAYER, Arno, 70567 Stuttgart (DE); STAHL, Peter, 72555 Metzingen (DE); KRAFT, Jürgen, 72555 Metzingen (DE)
(74) Vertreter: Hoeger, Stellrecht & Partner Patentanwälte mbB
(86) Internationale Anmeldenummer: PCT/EP2018/068571
(87) Internationale Veröffentlichungsnummer: WO 2019/011874

(56) Entgegenhaltungen:
- DE-A1-102013 204 308
- DE-A1-102013 220 486

## Beschreibung

Die vorliegende Erfindung betrifft eine Bipolarplatte für eine elektrochemische Vorrichtung, welche mindestens eine erste Bipolarplattenlage und eine zweite Bipolarplattenlage, die aus einem metallischen Material oder aus einem auf Kunststoff basierenden Material bestehen und durch eine Schweißnahtanordnung miteinander gefügt sind, umfasst,
wobei ein erstes Strömungsfeld für ein erstes fluides Medium an der ersten Bipolarplattenlage, ein zweites Strömungsfeld für ein zweites fluides Medium an der zweiten Bipolarplattenlage und ein Strömungsfeld für ein drittes fluides Medium zwischen der ersten Bipolarplattenlage und der zweiten Bipolarplattenlage ausgebildet ist und
wobei die erste Bipolarplattenlage eine erste Medium-Durchtrittsöffnung für das erste fluide Medium, einen Fluidverbindungskanal zwischen der ersten Medium-Durchtrittsöffnung und dem ersten Strömungsfeld, eine zweite Medium-Durchtrittsöffnung für das zweite fluide Medium und eine dritte Medium-Durchtrittsöffnung für das dritte fluide Medium aufweist.

Die elektrochemische Vorrichtung, in welcher eine solche Bipolarplatte zum Einsatz kommt, ist beispielsweise als ein Brennstoffzellenstapel oder als ein Elektrolyseur ausgebildet und umfasst vorzugsweise einen Stapel aus mehreren, längs einer Stapelrichtung aufeinanderfolgenden elektrochemischen Einheiten.

Eine solche Bipolarplatte weist zwei Seiten auf, die jeweils zu einer benachbarten elektrochemischen Einheit gerichtet sind, nämlich eine Anodenseite und eine Kathodenseite.

Auf der Anodenseite wird als fluides Medium das Brenngas für eine benachbarte elektrochemische Einheit über ein dem Brenngas zugeordnetes Strömungsfeld (auch als Verteilerstruktur oder "Flow Field" bezeichnet) zugeführt. Auf der Kathodenseite wird als fluides Medium ein Oxidationsmittel für eine weitere benachbarte elektrochemische Einheit über ein zugeordnetes Strömungsfeld (auch als Verteilerstruktur oder "Flow Field" bezeichnet) zugeführt.

Im Zwischenraum zwischen zwei oder mehr als zwei Bipolarplattenlagen der Bipolarplatte, im sogenannten Kühlmittel-Strömungsfeld, kann ein Kühlmittel geführt werden.

Durch die Medium-Durchtrittsöffnungen in den Bipolarplatten werden die fluiden Medien parallel zur Stapelrichtung in Mediumkanälen geführt, aus denen die fluiden Medien über Fluidverbindungskanäle (auch als "Gasports" oder "Strömungsports" bezeichnet) den jeweils zugeordneten Strömungsfeldern zugeführt und aus den jeweils zugeordneten Strömungsfeldern in andere Mediumkanäle, die ebenfalls parallel zur Stapelrichtung verlaufen, abgeführt werden.

Das Kühlmittel-Strömungsfeld muss zur Umgebung der elektrochemischen Vorrichtung hin und zu den Räumen, in denen andere fluide Medien geführt werden, hin abgedichtet werden.

Dazu werden die verschiedenen Bipolarplattenlagen einer Bipolarplatte mittels der Schweißnähte der Schweißnahtanordnung so miteinander verbunden, dass das Kühlmittel nicht aus dem Kühlmittel-Strömungsfeld austreten kann.

Rund um die dem anodenseitigen Strömungsfeld und dem kathodenseitigen Strömungsfeld zugeordneten Mediumkanäle ist jeweils eine Schweißnaht erforderlich, die den Übertritt des Kühlmittels in diese Mediumkanäle und - in umgekehrter Richtung - den Übertritt von anodenseitigem fluidem Medium oder kathodenseitigem fluidem Medium in das Kühlmittel-Strömungsfeld verhindert.

Zwischen dem Kühlmittel-Strömungsfeld und den Mediumkanälen zur Kühlmittelzufuhr und Kühlmittelabfuhr ist keine Schweißnaht vorgesehen, da der Austausch von Kühlmittel zwischen den Kühlmittel-Mediumkanälen und dem Kühlmittel-Strömungsfeld gewährleistet sein muss.

An den Fluidverbindungskanälen, durch welche die fluiden Medien zwischen den Mediumkanälen und den jeweils zugeordneten Strömungsfeldern strömen, können Durchbrüche in jeweils einer der Bipolarplattenlagen der Bipolarplatte vorgesehen sein, um die fluiden Medien dem jeweiligen Strömungsfeld zuzuführen. Diese Durchbrüche liegen innerhalb der Schweißnaht, welche den jeweiligen Mediumkanal umgibt, wie dies in der DE 10 2014 104 017 A1 offenbart ist.

Schweißnähte der Schweißnahtanordnung, die in einem oder in mehreren Schweißschritten geschweißt werden, überkreuzen einander an Kreuzungsstellen.

In einem Schmelzschweißverfahren, insbesondere in einem Laserschweißverfahren, werden üblicherweise am Schweißnahtanfang und am Schweißnahtende Einlaufbereiche beziehungsweise Auslaufbereiche vorgesehen, in denen die Schweißnaht mit Rampenprofilen (insbesondere Leistungsrampen, Geschwindigkeitsrampen und/oder Fokusrampen) erzeugt wird, um das Entstehen von Schweißnahtunregelmäßigkeiten zu vermeiden oder deren Auftreten zumindest zu reduzieren.

Solche Nahtunregelmäßigkeiten können einen Nahteinfall, Löcher, Lunker, Bohren, Kerben, Mikrorisse, Makrorisse, Schweißspritzer, Krater oder Ähnliches umfassen.

Diese Nahtunregelmäßigkeiten können dazu führen, dass eine oder mehrere Bipolarplattenlage der Bipolarplatte Undichtigkeiten aufweisen, so dass Medien zwischen den verschiedenen an die Undichtigkeit angrenzenden Medienräumen oder mit der Umgebung der elektrochemischen Vorrichtung ausgetauscht werden können.

Insbesondere im Bereich von Schweißnaht-Kreuzungsstellen und Schweißnahtenden treten Nahtunregelmäßigkeiten häufig auf.

Die DE 10 2013 204 308 A1 offenbart eine Bipolarplatte für eine elektrochemische Vorrichtung gemäß dem Oberbegriff von Anspruch 1.

Die DE 10 2013 220 486 A1 offenbart eine Bipolarplatte für eine elektrochemische Vorrichtung, die von mehreren Mediumkanälen durchsetzt wird und zwei Teile umfasst, die nach der Erzeugung von Dichtelementen an der Bipolarplatte in einem weiteren Prozessschritt durch Verschweißung stoffschlüssig miteinander verbunden werden. Die durch Verschweißung gebildeten Verbindungslinien, welche Mediumkanäle einschließen und längs der Teile der Bipolarplatte verlaufen, sind Laserschweißnähte, die sich nicht kreuzen und auch die Dichtelemente weder kreuzen noch berühren.

Der vorliegenden Erfindung liegt die Aufgabe zugrunde, eine Bipolarplatte der eingangs genannten Art zu schaffen, bei welcher in der Schweißnahtanordnung auftretende Nahtunregelmäßigkeiten keine Auswirkungen auf die Dichtigkeit zwischen den Medienräumen und zwischen den Medienräumen und der Umgebung der elektrochemischen Vorrichtung haben.

Diese Aufgabe wird bei einer Bipolarplatte mit den Merkmalen des Oberbegriffs von Anspruch 1 erfindungsgemäß dadurch gelöst, dass die Schweißnahtanordnung eine erste Mediumkanal-Schweißnaht, welche die erste Medium-Durchtrittsöffnung umgibt, eine zweite Mediumkanal-Schweißnaht, welche die zweite Medium-Durchtrittsöffnung umgibt, und eine Verbindungs-Schweißnaht umfasst, welche die erste Mediumkanal-Schweißnaht und die zweite Mediumkanal-Schweißnaht kreuzt, wobei
a) die Verbindungs-Schweißnaht mittels einer Schweißenergiequelle erzeugt ist, welcher die erste Bipolarplattenlage während des Schweißvorgangs zugewandt war, und das Schweißnahtende der Verbindungs-Schweißnaht innerhalb des von der ersten Mediumkanal-Schweißnaht umgebenen mediumführenden Bereichs der Bipolarplatte liegt
   und/oder
b) die Verbindungs-Schweißnaht die erste Mediumkanal-Schweißnaht und/oder die zweite Mediumkanal-Schweißnaht jeweils mindestens zweimal kreuzt.

Die Gefahr von durch Schweißnahtunregelmäßigkeiten hervorgerufenen Undichtigkeiten in einer Bipolarplattenlage ist nämlich an einem Schweißnahtende größer als an einem Schweißnahtanfang und in der während des Schweißvorgangs der Schweißenergiequelle, insbesondere einem Laser, zugewandten ersten Bipolarplattenlage größer als in der der Schweißenergiequelle abgewandten zweiten Bipolarplattenlage.

Wenn das Schweißnahtende der Verbindungs-Schweißnaht innerhalb des von der ersten Mediumkanal-Schweißnaht umgebenen ersten mediumführenden Bereichs der Bipolarplatte liegt, hat eine Undichtigkeit der Verbindungs-Schweißnaht in der der Schweißenergiequelle zugewandten ersten Bipolarplattenlage im Bereich des Schweißnahtendes dann nämlich lediglich zur Folge, dass das erste fluide Medium (beispielsweise das Oxidationsmittel) aus diesem ersten mediumführenden Bereich in das erste Strömungsfeld an der ersten Bipolarplattenlage gelangt, wohin das erste fluide Medium ohnehin durch den Fluidverbindungskanal zwischen dem ersten mediumführenden Bereich und dem ersten Strömungsfeld gelangen kann.

Dadurch, dass das Schweißnahtende der Verbindungs-Schweißnaht in den ersten mediumführenden Bereich gelegt wird, wird also ein Austritt des ersten fluiden Mediums in einen nicht für dieses Medium vorgesehenen Raum vermieden.

Alternativ oder ergänzend hierzu wird die der Erfindung zugrundeliegende Aufgabe dadurch gelöst, dass die Verbindungs-Schweißnaht die erste Mediumkanal-Schweißnaht und/oder die zweite Mediumkanal-Schweißnaht jeweils mindestens zweimal kreuzt, so dass das Schweißnahtende außerhalb des von der ersten Mediumkanal-Schweißnaht umgebenen ersten mediumführenden Bereichs der Bipolarplatte liegt und/oder der Schweißnahtanfang außerhalb des von der zweiten Mediumkanal-Schweißnaht umgebenen zweiten mediumführenden Bereichs der Bipolarplatte liegt.

Hierdurch wird erreicht, dass etwaige Undichtigkeiten aufgrund von Schweißnahtunregelmäßigkeiten im Bereich des Schweißnahtendes oder des Schweißnahtanfangs der Verbindungs-Schweißnaht nicht zum Entweichen von fluidem Medium durch die betreffende Verbindungs-Schweißnaht führen.

Dabei ist vorzugsweise vorgesehen, dass das Schweißnahtende und/oder der Schweißnahtanfang der Verbindungs-Schweißnaht auch außerhalb eines von einer Strömungsfeld-Dichtlinie einer Dichtungsanordnung der Bipolarplatte umgebenen Bereichs der Bipolarplatte liegt.

Vorzugsweise ist die Anzahl der Kreuzungsstellen, an denen die Verbindungs-Schweißnaht die erste Mediumkanal-Schweißnaht kreuzt, und/oder die Anzahl der Kreuzungsstellen, an denen die Verbindungs-Schweißnaht die zweite Mediumkanal-Schweißnaht kreuzt, geradzahlig (zwei, vier, ...).

Die Verbindungs-Schweißnaht ist vorzugsweise eine Laserschweißnaht.

Die Verbindungs-Schweißnaht verläuft vorzugsweise zumindest abschnittsweise um die dritte Medium-Durchtrittsöffnung (beispielsweise eine Kühlmittel-Durchtrittsöffnung) herum.

Bei einer bevorzugten Ausgestaltung der Erfindung ist vorgesehen, dass die erste Bipolarplattenlage eine Dichtungsanordnung mit einer Strömungsfeld-Dichtlinie aufweist, welche das erste Strömungsfeld umgibt, wobei der Schweißnahtanfang der Verbindungs-Schweißnaht und/oder das Schweißnahtende der Verbindungs-Schweißnaht innerhalb des von der Strömungsfeld-Dichtlinie der Dichtungsanordnung umgebenen Bereichs der Bipolarplatte liegt. Grundsätzlich kann die erste Bipolarplattenlage, welche während des Schweißvorgangs der Schweißenergiequelle zugewandt ist, eine kathodenseitige Bipolarplattenlage oder eine anodenseitige Bipolarplattenlage der Bipolarplatte sein.

Bei einer bevorzugten Ausgestaltung der Erfindung ist vorgesehen, dass die erste Bipolarplattenlage eine kathodenseitige Bipolarplattenlage der Bipolarplatte ist.

Das dritte fluide Medium ist vorzugsweise ein Kühlmittel, mittels welchem die elektrochemische Vorrichtung in deren Betrieb kühlbar ist.

Bei einer bevorzugten Ausgestaltung der Erfindung ist vorgesehen, dass ein Schweißnahtende und/oder ein Schweißnahtanfang der ersten Mediumkanal-Schweißnaht außerhalb des von der ersten Mediumkanal-Schweißnaht umgebenen ersten mediumführenden Bereichs der Bipolarplatte liegt, und/oder dass ein Schweißnahtende und/oder ein Schweißnahtanfang der zweiten Mediumkanal-Schweißnaht außerhalb des von der zweiten Mediumkanal-Schweißnaht umgebenen zweiten mediumführenden Bereichs der Bipolarplatte liegt.

Auch hierdurch wird vermieden, dass Schweißnahtunregelmäßigkeiten im Bereich der Schweißnahtenden und/oder der Schweißnahtanfänge der ersten Mediumkanal-Schweißnaht beziehungsweise der zweiten Mediumkanal-Schweißnaht zu einem unerwünschten Austreten von fluiden Medien aus dem ersten mediumführenden Bereich beziehungsweise aus dem zweiten mediumführenden Bereich der Bipolarplatte führen.

Der Schweißnahtanfang der Verbindungs-Schweißnaht liegt vorzugsweise innerhalb des von der zweiten Mediumkanal-Schweißnaht umgebenen zweiten mediumführenden Bereichs der Bipolarplatte.

Alternativ hierzu kann vorgesehen sein, dass die Verbindungs-Schweißnaht die zweite Mediumkanal-Schweißnaht mindestens zweimal kreuzt, so dass der Schweißnahtanfang außerhalb des von der zweiten Mediumkanal-Schweißnaht umgebenen zweiten mediumführenden Bereichs der Bipolarplatte liegt.

Vorzugsweise ist die Anzahl der Kreuzungsstellen, an denen die Verbindungs-Schweißnaht die zweite Mediumkanal-Schweißnaht kreuzt, geradzahlig (zwei, vier, ...).

Da Schweißnahtunregelmäßigkeiten besonders häufig im Bereich der Schweißnahtenden und der Schweißnahtanfänge auftreten, ist bei bevorzugten Ausgestaltungen der Erfindung vorgesehen, dass das Schweißnahtende der Verbindungs-Schweißnaht von der nächstliegenden Kreuzungsstelle zwischen der Verbindungs-Schweißnaht und der ersten Mediumkanal-Schweißnaht einen Abstand S von mindestens 0,1 mm, insbesondere von mindestens 0,5 mm, besonders bevorzugt von mindestens 1,0 mm, aufweist, und/oder dass der Schweißnahtanfang der Verbindungs-Schweißnaht von der Kreuzungsstelle zwischen der Verbindungs-Schweißnaht und der zweiten Mediumkanal-Schweißnaht einen Abstand S' von mindestens 0,1 mm, insbesondere von mindestens 0,5 mm, besonders bevorzugt von mindestens 1,0 mm, aufweist.

Ferner ist vorzugsweise vorgesehen, dass das Schweißnahtende und/oder der Schweißnahtanfang der ersten Mediumkanal-Schweißnaht einen Abstand S" beziehungsweise S'" von der Kreuzungsstelle, an welcher die erste Mediumkanal-Schweißnaht sich selbst kreuzt, aufweist.

In entsprechender Weise ist es günstig, wenn das Schweißnahtende und/oder der Schweißnahtanfang der zweiten Mediumkanal-Schweißnaht einen Abstand S" beziehungsweise S'" von der Kreuzungsstelle, an welcher die zweite Mediumkanal-Schweißnaht sich selbst kreuzt, aufweist.

Ferner ist es günstig, wenn das Schweißnahtende und/oder der Schweißnahtanfang der ersten Mediumkanal-Schweißnaht außerhalb des von der ersten Mediumkanal-Schweißnaht umgebenen ersten mediumführenden Bereichs der Bipolarplatte angeordnet ist.

In entsprechender Weise ist es günstig, wenn das Schweißnahtende und/oder der Schweißnahtanfang der zweiten Mediumkanal-Schweißnaht außerhalb des von der zweiten Mediumkanal-Schweißnaht umgebenen zweiten mediumführenden Bereichs der Bipolarplatte angeordnet ist.

Die erfindungsgemäße Bipolarplatte eignet sich insbesondere zur Verwendung in einer elektrochemischen Vorrichtung, welche mehrere elektrochemische Einheiten, die längs einer Stapelrichtung aufeinanderfolgen, umfasst, wobei mindestens eine der elektrochemischen Einheiten eine erfindungsgemäße Bipolarplatte umfasst.

Die vorliegende Erfindung betrifft ferner ein Verfahren zum Herstellen einer Bipolarplatte für eine elektrochemische Vorrichtung, welche mindestens eine erste Bipolarplattenlage und eine zweite Bipolarplattenlage umfasst,
wobei ein erstes Strömungsfeld für ein erstes fluides Medium an der ersten Bipolarplattenlage, ein zweites Strömungsfeld für ein zweites fluides Medium an der zweiten Bipolarplattenlage und ein drittes Strömungsfeld für ein drittes fluides Medium zwischen der ersten Bipolarplattenlage und der zweiten Bipolarplattenlage ausgebildet ist und
wobei die erste Bipolarplattenlage eine erste Medium-Durchtrittsöffnung für das erste fluide Medium, einen Fluidverbindungskanal zwischen der ersten Medium-Durchtrittsöffnung und dem ersten Strömungsfeld, eine zweite Medium-Durchtrittsöffnung für das zweite fluide Medium und eine dritte Medium-Durchtrittsöffnung für das dritte fluide Medium aufweist.

Der vorliegenden Erfindung liegt die weitere Aufgabe zugrunde, ein solches Verfahren zum Herstellen einer Bipolarplatte zu schaffen, durch welches eine Bipolarplatte erzeugt wird, bei der Schweißnahtunregelmäßigkeiten keine Auswirkungen auf die Dichtigkeit zwischen den Medienräumen und zwischen den Medienräumen und der Umgebung der elektrochemischen Vorrichtung haben.

Diese Aufgabe wird erfindungsgemäß durch ein Verfahren nach Anspruch 14 gelöst, wobei das Verfahren Folgendes umfasst:
- Erzeugen einer Schweißnahtanordnung, durch welche die erste Bipolarplattenlage und die zweite Bipolarplattenlage miteinander gefügt sind, mittels einer Schweißenergiequelle, wobei die Schweißnahtanordnung eine erste Mediumkanal-Schweißnaht, welche die erste Medium-Durchtrittsöffnung umgibt, eine zweite Mediumkanal-Schweißnaht, welche die zweite Medium-Durchtrittsöffnung umgibt, und eine Verbindungs-Schweißnaht, welche die erste Mediumkanal-Schweißnaht und die zweite Mediumkanal-Schweißnaht kreuzt, umfasst, und
   wobei
   a) die erste Bipolarplattenlage während des Schweißvorgangs der Schweißenergiequelle zugewandt ist und die Bildung der Verbindungs-Schweißnaht an einem Schweißnahtende, das innerhalb des von der ersten Mediumkanal-Schweißnaht umgebenen ersten mediumführenden Bereichs angeordnet ist, beendet wird,
      und/oder
   b) die Verbindungs-Schweißnaht so gebildet wird, dass sie die erste Mediumkanal-Schweißnaht und/oder die zweite Mediumkanal-Schweißnaht jeweils mindestens zweimal kreuzt.

Die Vorteile der beiden Alternativen a) und b) des erfindungsgemäßen Verfahrens wurden bereits vorstehend im Zusammenhang mit den Alternativen a) und b) der erfindungsgemäßen Bipolarplatte erläutert.

Ebenso wurden vorteilhafte Ausgestaltungen des erfindungsgemäßen Verfahrens bereits vorstehend im Zusammenhang mit besonderen Ausgestaltungen der erfindungsgemäßen Bipolarplatte erläutert.

Die Bipolarplattenlagen bestehen aus einem metallischen Material oder aus einem auf Kunststoff basierenden Material, beispielsweise aus einem thermoplastischen Material.

Zusätzlich zu der ersten Bipolarplattenlage und der zweiten Bipolarplattenlage kann die Bipolarplatte noch eine oder mehrere Zwischenlagen umfassen, die vorzugsweise zwischen der ersten Bipolarplattenlage und der zweiten Bipolarplattenlage angeordnet sind.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Draufsicht auf eine Bipolarplatte für eine elektrochemische Vorrichtung, und zwar auf eine erste Bipolarplattenlage der Bipolarplatte mit einem ersten Strömungsfeld für ein erstes fluides Medium;
- Fig. 2: einen ausschnittsweisen Querschnitt durch die Bipolarplatte aus Fig. 1, längs der Linie 2 - 2 in Fig. 1;
- Fig. 3: eine schematische Darstellung zweier sich kreuzender Schweißnähte;
- Fig. 4: eine schematische Darstellung einer ersten Schweißnaht, welche einen abzudichtenden Mediumbereich berandet, und einer zweiten Schweißnaht, welche die erste Schweißnaht kreuzt, einen innerhalb des von der ersten Schweißnaht abzudichtenden Mediumbereichs verlaufenden Abschnitt aufweist, die erste Schweißnaht erneut kreuzt und außerhalb des von der ersten Schweißnaht abzudichtenden Mediumbereichs endet; und
- Fig. 5: eine schematische Darstellung zweier sich kreuzender Schweißnähte, wobei die Enden der Schweißnähte einen Abstand S von der Kreuzungsstelle der Schweißnähte aufweisen und zu den Enden der Schweißnähte führende Endabschnitte der Schweißnähte mit einem zu der Kreuzungsstelle führenden Abschnitt der jeweils anderen Schweißnaht einen Winkel α einschließen.

Gleiche oder funktional äquivalente Elemente sind in allen Figuren mit denselben Bezugszeichen bezeichnet.

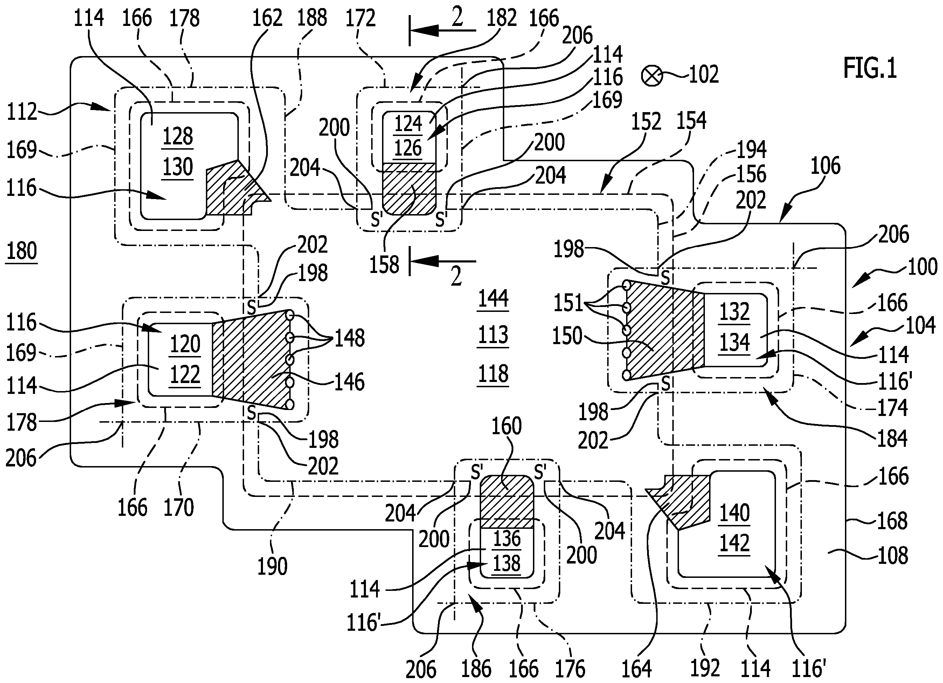

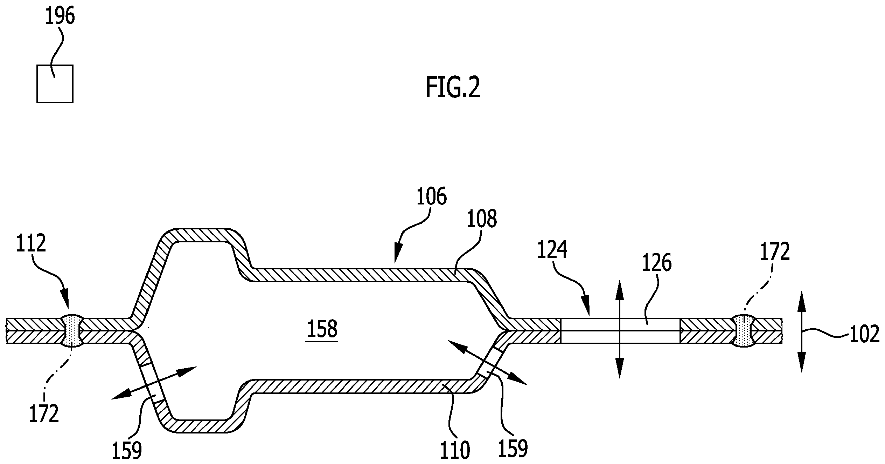

Eine in den Fig. 1 und 2 ausschnittsweise dargestellte, als Ganzes mit 100 bezeichnete elektrochemische Vorrichtung, beispielsweise ein Brennstoffzellenstapel oder ein Elektrolyseur, umfasst einen Stapel, der mehrere in einer Stapelrichtung 102 aufeinanderfolgende elektrochemische Einheiten 104, beispielsweise Brennstoffzelleneinheiten oder Elektrolyseeinheiten, und eine (nicht dargestellte) Spannvorrichtung zum Beaufschlagen der elektrochemischen Einheiten 104 mit einer parallel zu der Stapelrichtung 102 gerichteten Spannkraft umfasst.

Jede der elektrochemischen Einheiten 104 der elektrochemischen Vorrichtung 100 umfasst jeweils eine Bipolarplatte 106.

Jede Bipolarplatte 106 umfasst bei dieser Ausführungsform eine erste Bipolarplattenlage 108 und eine zweite Bipolarplattenlage 110, die durch eine Schweißnahtanordnung 112 fluiddicht aneinander festgelegt sind.

Zwischen der ersten Bipolarplattenlage 108 und der zweiten Bipolarplattenlage 110 können eine oder mehrere Zwischenlagen der Bipolarplatte 106 angeordnet sein.

In einem (zeichnerisch nicht dargestellten) Zwischenraum zwischen der ersten Bipolarplattenlage 108 und der zweiten Bipolarplattenlage 110 ist ein Kühlmittel-Strömungsfeld 113 ausgebildet.

Die Bipolarplatte 106 ist vorzugsweise aus einem metallischen Material oder aus einem Kunststoffmaterial, insbesondere aus einem thermoplastischen Material, gebildet.

Jede Bipolarplatte 106 weist mehrere Medium-Durchtrittsöffnungen 114 auf, durch welche jeweils ein der elektrochemischen Vorrichtung 100 zuzuführendes fluides Medium (im Falle eines Brennstoffzellenstapels beispielsweise ein Brenngas, ein Oxidationsmittel oder ein Kühlmittel) durch die Bipolarplatte 106 hindurchtreten kann.

Die Medium-Durchtrittsöffnungen 114 der im Stapel aufeinanderfolgenden Bipolarplatten 106 und die in der Stapelrichtung 102 zwischen den Medium-Durchtrittsöffnungen 114 liegenden Zwischenräume bilden zusammen jeweils einen Mediumkanal 116.

Ein solcher Mediumkanal 116 wird häufig auch als "Manifold" bezeichnet.

Jedem Mediumkanal 116, durch welchen ein fluides Medium der elektrochemischen Vorrichtung 100 zuführbar ist, ist jeweils mindestens ein anderer Mediumkanal 116' zugeordnet, durch welchen das betreffende fluide Medium aus der elektrochemischen Vorrichtung abführbar ist.

Durch ein dazwischenliegendes Strömungsfeld 118, welches an der Oberfläche einer der Bipolarplattenlagen 108, 110 oder (im Falle des Kühlmittel-Strömungsfeldes 113) im Zwischenraum zwischen den Bipolarplattenlagen 108, 110 ausgebildet ist, kann das Medium aus dem Zuführ-Mediumkanal 116 quer, vorzugsweise im Wesentlichen senkrecht, zu der Stapelrichtung zu dem Abführ-Mediumkanal 116' strömen.

In Fig. 1 ist beispielsweise ein erster Mediumkanal 120 mit einer ersten Medium-Durchtrittsöffnung 122 für die Zufuhr eines ersten fluiden Mediums (beispielsweise ein Oxidationsmittel), ein zweiter Mediumkanal 124 mit einer zweiten Medium-Durchtrittsöffnung 126 für die Zufuhr eines zweiten fluiden Mediums (beispielsweise ein Brenngas), ein dritter Mediumkanal 128 mit einer dritten Medium-Durchtrittsöffnung 130 für die Zufuhr eines dritten fluiden Mediums (beispielsweise ein Kühlmittel), ein vierter Mediumkanal 132 mit einer vierten Medium-Durchtrittsöffnung 134 für die Abfuhr des ersten fluiden Mediums (beispielsweise des nicht verbrauchten Oxidationsmittels oder Kathoden-Abgases), ein fünfter Mediumkanal 136 mit einer Medium-Durchtrittsöffnung 138 für die Abfuhr des zweiten fluiden Mediums (beispielsweise des nicht verbrauchten Brenngases oder des Anoden-Abgases) und ein sechster Mediumkanal 140 mit einer sechsten Medium-Durchtrittsöffnung 142 für die Abfuhr des dritten fluiden Mediums (beispielsweise des Kühlmittels) dargestellt.

Ferner umfasst die in Fig. 1 dem Betrachter zugewandte erste Bipolarplattenlage 108, beispielsweise die kathodenseitige Bipolarplattenlage, ein erstes Strömungsfeld 144 für das erste fluide Medium (beispielweise das Oxidationsmittel oder das Kathoden-Abgas).

Das erste Strömungsfeld 144 steht über einen Fluidverbindungskanal 146, welcher Fluid-Durchtrittsöffnungen 148 an der ersten Bipolarplattenlage 108 umfasst, in Fluidverbindung mit dem ersten Mediumkanal 120 und der ersten Medium-Durchtrittsöffnung 122.

Ferner steht das erste Strömungsfeld 144 über einen Fluid-Verbindungskanal 150, welcher Fluid-Durchtrittsöffnungen 151 in der ersten Bipolarplattenlage 108 umfasst, in Fluidverbindung mit dem vierten Mediumkanal 132 und der vierten Medium-Durchtrittsöffnung 134.

Somit kann das erste fluide Medium aus dem ersten Mediumkanal 120 durch den Fluid-Verbindungskanal 146 in das erste Strömungsfeld 144 gelangen und aus dem ersten Strömungsfeld 144 durch den Fluid-Verbindungskanal 150 in den vierten Mediumkanal 132 gelangen.

In entsprechender Weise kann das zweite fluide Medium aus dem zweiten Mediumkanal 124 durch einen Fluidverbindungskanal 158, welcher Fluid-Durchtrittsöffnungen an der zweiten Bipolarplattenlage 110 umfasst, in ein zweites Strömungsfeld für das zweite fluide Medium (beispielsweise das Brenngas oder das Anoden-Abgas) an der zweiten Bipolarplattenlage 110 und von dort durch einen Fluidverbindungskanal 160 in den fünften Mediumkanal 136 gelangen.

Das dritte fluide Medium (beispielsweise das Kühlmittel) kann durch einen zwischen den beiden Bipolarplattenlagen 108 und 110 ausgebildeten Fluidverbindungskanal 162 in ein zwischen den Bipolarplatten 108, 110 ausgebildetes drittes Strömungsfeld (beispielsweise das Kühlmittel-Strömungsfeld 113) und von dort durch einen Fluidverbindungskanal 164 in den sechsten Mediumkanal 140 gelangen.

Ein unerwünschtes Austreten der fluiden Medien aus den Mediumkanälen 116, aus dem ersten Strömungsfeld 144 an der ersten Bipolarplattenlage 108 und aus einem (nicht dargestellten) zweiten Strömungsfeld an der zweiten Bipolarplattenlage 110 wird durch eine Dichtungsanordnung 152 vermieden, deren Dichtlinien 154 in der Draufsicht von Fig. 1 durch gebrochene Linien dargestellt sind.

Die Dichtungsanordnung 152 umfasst eine Strömungsfeld-Dichtlinie 156, welche das erste Strömungsfeld 144 umgibt und die Fluidverbindungskanäle 146 und 150 überquert.

Die Dichtungsanordnung 152 umfasst ferner Mediumkanal-Dichtlinien 166, welche jeweils einen der Mediumkanäle 116 zumindest abschnittsweise, vorzugsweise vollständig, umgeben und den betreffenden Mediumkanal 116 von einem äußeren Rand 168 der Bipolarplatte 106 trennen.

Die Dichtlinien 154 der Dichtungsanordnung 152 sind an (nicht dargestellten) Dichtelementen vorgesehen, welche an den einander abgewandten Außenseiten der Bipolarplattenlagen 108, 110 angeordnet sind.

Diese Dichtelemente können beispielsweise in Form von Dichtwülsten aus einem Elastomermaterial ausgebildet sein.

Ein unerwünschtes Austreten des dritten fluiden Mediums aus dem dritten Strömungsfeld, welches zwischen den Bipolarplattenlagen 108, 110 ausgebildet ist, wird durch die Schweißnahtanordnung 112 verhindert, mittels welcher die Bipolarplattenlage 108, 110 aneinander festgelegt sind.

Die Schweißnähte 169 der Schweißnahtanordnung 112 sind in der Draufsicht von Fig. 1 als strichpunktierte Linien dargestellt.

Die Schweißnahtanordnung 112 umfasst eine erste Mediumkanal-Schweißnaht 170, welche die erste Medium-Durchtrittsöffnung 122 und den Fluidverbindungskanal 146 umgibt, eine zweite Mediumkanal-Schweißnaht 172, welche die zweite Medium-Durchtrittsöffnung 126 und den Fluidverbindungskanal 158 umgibt, eine dritte Mediumkanal-Schweißnaht 174, welche die vierte Medium-Durchtrittsöffnung 134 und den Fluidverbindungskanal 150 umgibt, und eine vierte Mediumkanal-Schweißnaht 176, welche die fünfte Medium-Durchtrittsöffnung 138 und den Fluidverbindungskanal 160 umgibt.

Die erste Mediumkanal-Schweißnaht 170 umschließt einen ersten mediumführenden Bereich 178, welcher durch die erste Mediumkanal-Schweißnaht 170 gegenüber dem dritten Strömungsfeld (Kühlmittel-Strömungsfeld 113) und gegenüber dem Außenraum 180 der Bipolarplatte 106 abgedichtet wird.

Die zweite Mediumkanal-Schweißnaht 172 umschließt einen zweiten mediumführenden Bereich 182, welchen die zweite Mediumkanal-Schweißnaht 172 gegenüber dem dritten Strömungsfeld (Kühlmittel-Strömungsfeld 113) und gegenüber dem Außenraum 180 der Bipolarplatte 106 abdichtet.

Die dritte Mediumkanal-Schweißnaht 174 umschließt einen dritten mediumführenden Bereich 184, welchen die dritte Mediumkanal-Schweißnaht 174 gegenüber dem dritten Strömungsfeld (Kühlmittel-Strömungsfeld 113) und gegenüber dem Außenraum 180 der Bipolarplatte 106 abdichtet.

Die vierte Mediumkanal-Schweißnaht 176 umschließt einen vierten mediumführenden Bereich 186, welchen die vierte Mediumkanal-Schweißnaht 176 gegenüber dem dritten Strömungsfeld (Kühlmittel-Strömungsfeld 113) und gegenüber dem Außenraum 180 der Bipolarplatte 106 abdichtet.

Die Schweißnahtanordnung 112 umfasst ferner eine erste Verbindungs-Schweißnaht 188, welche von dem zweiten mediumführenden Bereich 182 zu dem ersten mediumführenden Bereich 178 führt.

Dabei verläuft die erste Verbindungs-Schweißnaht 188 auf der dem dritten Strömungsfeld (Kühlmittel-Strömungsfeld 113) abgewandten Seite der dritten Medium-Durchtrittsöffnung 130, so dass die erste Verbindungs-Schweißnaht 188 den Durchgang vom dritten Mediumkanal 128 in das dritte Strömungsfeld (Kühlmittel-Strömungsfeld 113) freilässt.

Ferner umfasst die Schweißnahtanordnung 112 eine zweite Verbindungs-Schweißnaht 190, welche von dem vierten mediumführenden Bereich 186 in den ersten mediumführenden Bereich 178 führt und so den Austritt des dritten fluiden Mediums aus dem dritten Strömungsfeld (Kühlmittel-Strömungsfeld 113) in den Außenraum 180 der Bipolarplatte 106 verhindert.

Die Schweißnahtanordnung 112 umfasst ferner eine dritte Verbindungs-Schweißnaht 192, welche von dem vierten mediumführenden Bereich 186 in den dritten mediumführenden Bereich 184 führt.

Dabei verläuft die dritte Verbindungs-Schweißnaht 192 auf der dem dritten Strömungsfeld (Kühlmittel-Strömungsfeld 113) abgewandten Seite der sechsten Medium-Durchtrittsöffnung 142, so dass die dritte Verbindungs-Schweißnaht 192 den Durchtritt von dem dritten Strömungsfeld (Kühlmittel-Strömungsfeld 113) in den sechsten Mediumkanal 140 freilässt.

Ferner umfasst die Schweißnahtanordnung 112 eine vierte Verbindungs-Schweißnaht 194, welche von dem zweiten mediumführenden Bereich 182 in den dritten mediumführenden Bereich 184 führt. Diese vierte Verbindungs-Schweißnaht 194 verhindert somit den Austritt des dritten fluiden Mediums aus dem dritten Strömungsfeld (Kühlmittel-Strömungsfeld 113).

Die Schweißnähte 169 der Schweißnahtanordnung 112 werden mittels einer Schweißenergiequelle 196 erzeugt, die während des Schweißvorgangs auf der der zweiten Bipolarplattenlage 110 abgewandten Seite der Bipolarplatte 106 angeordnet ist, wie dies in Fig. 2 schematisch dargestellt ist. Während des Schweißvorgangs ist somit die erste Bipolarplattenlage 108 der Schweißenergiequelle 196 zugewandt.

Die Schweißenergiequelle 196 kann insbesondere ein Laser sein, welcher einen Laserstrahl für das Erzeugen der Schweißnähte 169 durch Laserschweißen erzeugt.

Bei einem Laserschweißvorgang können abhängig von Randbedingungen, insbesondere von den Materialeigenschaften, Geometrien, Eigenspannungen und Fertigungstoleranzen der Bipolarplattenlagen 108, 110, von der Bauteileinspannung, den Prozessparametern und/oder der Beschaffenheit der Laserschweißvorrichtung, Unregelmäßigkeiten in den erzeugten Schweißnähten 169 auftreten, beispielsweise Nahteinfälle, Löcher, Lunker, Bohren, Kerben, Mikrorisse, Makrorisse etc.

Diese Nahtdefekte können dazu führen, dass eine der Bipolarplattenlagen 108, 110 oder beide Bipolarplattenlagen 108, 110 Undichtigkeiten aufweisen und somit Medien zwischen den von den Schweißnähten 169 abzudichtenden mediumführenden Bereichen und deren Umgebung ausgetauscht werden können.

Die Gefahr solcher durch Schweißnahtunregelmäßigkeiten hervorgerufener Undichtigkeiten in einer Bipolarplattenlage 108, 110 ist an einem Schweißnahtende 198 größer als an einem Schweißnahtanfang 200 und in der während des Schweißvorgangs der Schweißenergiequelle 196, insbesondere dem Laser, zugewandten ersten Bipolarplattenlage 108 größer als in der der Schweißenergiequelle 196 abgewandten zweiten Bipolarplattenlage 110.

Die erste Verbindungs-Schweißnaht 188 wird daher vorzugsweise so erzeugt, dass der Schweißnahtanfang 200 in dem zweiten mediumführenden Bereich 182 und das Schweißnahtende 198 in dem ersten mediumführenden Bereich 178 liegt.

Eine Undichtigkeit der ersten Verbindungs-Schweißnaht 188 in der der Schweißenergiequelle 196 zugewandten ersten Bipolarplattenlage 108 im Bereich des Schweißnahtendes 198 hat dann nämlich lediglich zur Folge, dass das erste fluide Medium (beispielsweise das Oxidationsmittel) aus dem ersten mediumführenden Bereich 178 in das erste Strömungsfeld 144 an der ersten Bipolarplattenlage 108 gelangt, wohin das erste fluide Medium ohnehin durch den Fluidverbindungskanal 146 gelangen kann.

Dadurch, dass das Schweißnahtende 198 in den ersten mediumführenden Bereich 178 gelegt wird, wird also ein Austritt des ersten fluiden Mediums in einen nicht für dieses Medium vorgesehenen Raum vermieden.

Ferner wird das Schweißnahtende 198 vorzugsweise so gelegt, dass es innerhalb des von der Strömungsfeld-Dichtlinie 156 der Dichtungsanordnung 152 umschlossenen Bereichs der Bipolarplatte 106 liegt.

Auch der Schweißnahtanfang 200 der ersten Verbindungs-Schweißnaht 188 wird vorzugsweise so gelegt, dass er innerhalb des von der Strömungsfeld-Dichtlinie 156 der Dichtungsanordnung 152 umschlossenen Bereichs der Bipolarplatte 106 liegt.

Die zweite Verbindungs-Schweißnaht 190 wird vorzugsweise so erzeugt, dass der Schweißnahtanfang 200 innerhalb des vierten mediumführenden Bereichs 186 und innerhalb des von der Strömungsfeld-Dichtlinie 156 umschlossenen Bereichs der Bipolarplatte 106 liegt und dass das Schweißnahtende 198 innerhalb des ersten mediumführenden Bereichs 178 und innerhalb des von der Strömungsfeld-Dichtlinie 156 der Dichtungsanordnung 152 umschlossenen Bereichs der Bipolarplatte 106 liegt.

Die dritte Verbindungs-Schweißnaht 192 wird vorzugsweise so erzeugt, dass der Schweißnahtanfang 200 innerhalb des vierten mediumführenden Bereichs 186 und innerhalb des von der Strömungsfeld-Dichtlinie 156 der Dichtungsanordnung 152 umschlossenen Bereichs der Bipolarplatte 106 liegt und dass das Schweißnahtende 198 innerhalb des dritten mediumführenden Bereichs 184 und innerhalb des von der Strömungsfeld-Dichtlinie 156 der Dichtungsanordnung 152 umschlossenen Bereichs der Bipolarplatte 106 liegt.

Die vierte Verbindungs-Schweißnaht 194 wird vorzugsweise so erzeugt, dass der Schweißnahtanfang 200 innerhalb des zweiten mediumführenden Bereichs 182 und innerhalb des von der Strömungsfeld-Dichtlinie 156 der Dichtungsanordnung 152 umschlossenen Bereichs der Bipolarplatte 106 liegt und dass das Schweißnahtende 198 innerhalb des dritten mediumführenden Bereichs 184 und innerhalb des von der Strömungsfeld-Dichtlinie 156 der Dichtungsanordnung 152 umschlossenen Bereichs der Bipolarplatte 106 liegt.

Ferner werden die Verbindungs-Schweißnähte 188, 190, 192 und 194 vorzugsweise so erzeugt, dass das Schweißnahtende 198 um einen Abstand S, der mindestens 0,1 mm beträgt, von der Kreuzungsstelle 202 beabstandet ist, an welcher die jeweilige Verbindungs-Schweißnaht 188, 190, 192, 194 die erste Mediumkanal-Schweißnaht 170 beziehungsweise die dritte Mediumkanal-Schweißnaht 174 kreuzt.

Ferner werden die Verbindungs-Schweißnähte 188, 190, 192, 194 vorzugsweise so erzeugt, dass die Schweißnahtanfänge 200 um einen Abstand S', welcher mindestens 0,1 mm beträgt, von der Kreuzungsstelle 204 beabstandet sind, an welcher die jeweilige Verbindungs-Schweißnaht 188, 190, 192, 194 die zweite Mediumkanal-Schweißnaht 172 beziehungsweise die vierte Mediumkanal-Schweißnaht 176 kreuzt.

Die Abstände S und S' können im Wesentlichen gleich groß sein.

Die Abstände S und/oder S' können insbesondere mindestens 0,5 mm betragen.

Ferner ist vorzugsweise vorgesehen, dass die Abstände S und/oder S' höchstens 10 mm, insbesondere höchstens 2 mm, betragen.

Die Mediumkanal-Schweißnähte 170, 172, 174 und 176 sind in sich geschlossen ausgebildet.

Insbesondere kreuzen diese Mediumkanal-Schweißnähte sich selbst an jeweils einer Kreuzungsstelle 206.

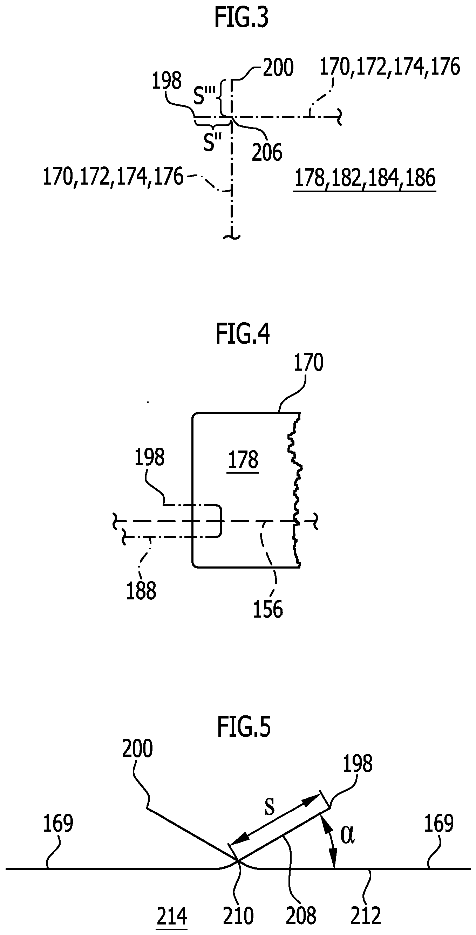

Dabei ist die Überkreuzung so ausgebildet, dass sowohl der Schweißnahtanfang 200 als auch das Schweißnahtende 198 außerhalb des von der betreffenden Mediumkanal-Schweißnaht 170, 172, 174, 176 umschlossenen mediumführenden Bereichs 178, 182, 184 beziehungsweise 186 liegen (siehe Fig. 3).

Die Mediumkanal-Schweißnähte 170, 172, 174 und 176 werden vorzugsweise so erzeugt, dass das Schweißnahtende 198 um einen Abstand S", der mindestens 0,1 mm beträgt, von der Kreuzungsstelle 206 beabstandet ist, an welcher die jeweilige Mediumkanal-Schweißnaht 170, 172, 174, 176 sich selbst überkreuzt.

Ferner werden die Mediumkanal-Schweißnähte 170, 172, 174 und 176 vorzugsweise so erzeugt, dass der Schweißnahtanfang 200 um einen Abstand S'", welcher mindestens 0,1 mm beträgt, von der Kreuzungsstelle 206 beabstandet ist, an welcher die jeweilige Mediumkanal-Schweißnaht 170, 172, 174 oder 176 sich selbst überkreuzt.

Die Abstände S" und S'" können im Wesentlichen gleich groß sein.

Die Abstände S" und/oder S'" können insbesondere mindestens 0,5 mm betragen.

Ferner ist vorzugsweise vorgesehen, dass die Abstände S" und/oder S'" höchstens 10 mm, insbesondere höchstens 2 mm, betragen.

Durch diese Gestaltung der Mediumkanal-Schweißnähte 170, 172, 174 und 176 ist gewährleistet, dass das Schweißnahtende 198 und/oder der Schweißnahtanfang 200 der betreffenden Mediumkanal-Schweißnaht 170, 172, 174, 176 außerhalb des von der Schweißnaht abgedichteten mediumführenden Bereichs 178, 182, 184 beziehungsweise 186 liegt.

Undichtigkeiten aufgrund von Schweißnahtunregelmäßigkeiten im Bereich des Schweißnahtendes 198 oder im Bereich des Schweißnahtanfangs 200 können daher nicht zu einem Entweichen von fluidem Medium aus dem jeweiligen mediumführenden Bereich 178, 182, 184 beziehungsweise 186 führen.

Eine in Fig. 4 ausschnittsweise dargestellte zweite Ausführungsform einer Bipolarplatte 106 unterscheidet sich von der in den Fig. 1 bis 3 dargestellten ersten Ausführungsform dadurch, dass bei mindestens einer der Verbindungs-Schweißnähte 188, 190, 192 und 194 das Schweißnahtende 198 nicht innerhalb des ersten mediumführenden Bereichs 178 oder des dritten mediumführenden Bereichs 184 liegt, sondern die jeweilige Verbindungs-Schweißnaht 188, 190, 192, 194 die jeweils zugeordnete Mediumkanal-Schweißnaht 170 beziehungsweise 174 zweimal kreuzt, so dass das Schweißnahtende 198 außerhalb des von der jeweiligen Mediumkanal-Schweißnaht 170 beziehungsweise 174 umgebenen mediumführenden Bereichs 178 beziehungsweise 184 und außerhalb des von der Strömungsfeld-Dichtlinie 156 der Dichtungsanordnung 152 umgebenen Bereichs der Bipolarplatte 106 liegt.

Hierdurch wird erreicht, dass etwaige Undichtigkeiten aufgrund von Schweißnahtunregelmäßigkeiten im Bereich des Schweißnahtendes 198 nicht zum Entweichen von fluidem Medium durch die betreffende Verbindungs-Schweißnaht 188, 190, 192 oder 194 führen.

Fig. 5 zeigt schematisch eine Überlappung von zwei Schweißnähten 169, bei welcher ein Schweißnahtabschnitt 208 der einen Schweißnaht 169, welcher von dem Schweißnahtende 198 zu der Kreuzungsstelle 210 führt, an welcher die beiden Schweißnähte 208 einander kreuzen, eine Länge S aufweist und mit einem Schweißnahtabschnitt 212 der anderen Schweißnaht 169, welcher auf der dem Schweißnahtanfang 200 dieser Schweißnaht 169 abgewandten Seite der Kreuzungsstelle 210 angeordnet ist, einen Winkel α einschließt.

Der Winkel α liegt vorzugsweise im Bereich von mehr als 0° bis 90°.

Der Abstand S beträgt vorzugsweise mindestens 0,1 mm, insbesondere mindestens 0,5 mm, und/oder vorzugsweise höchstens 10 mm, insbesondere höchstens 2 mm.

Der Schweißnahtanfang 200 und das Schweißnahtende 198 liegen außerhalb des von den Schweißlinien abgedichteten mediumführenden Bereichs 214 der Bipolarplatte 106.

Alternativ zu der in Fig. 5 dargestellten Ausführungsform kann auch das Schweißnahtende 198 ein Schweißnahtanfang 200 sein und/oder der Schweißnahtanfang 200 ein Schweißnahtende 198 sein.

Wenn die Schweißenergiequelle 196 nicht von der Seite der ersten Bipolarplattenlage 108, sondern von der Seite der zweiten Bipolarplattenlage 110 her während des Schweißvorgangs auf die Bipolarplattenlagen 108, 110 einwirkt, so werden die Erzeugungsrichtungen der Verbindungs-Schweißnähte 188, 190, 192 und 194 vorzugsweise so geändert, dass die Lagen der Schweißnahtenden 198 und der Schweißnahtanfänge 200 dieser Verbindungs-Schweißnähte 188, 190, 192 und 194 gegenüber der vorstehend beschriebenen und zeichnerisch dargestellten Lage miteinander vertauscht werden.

## Patentansprüche

1. Bipolarplatte für eine elektrochemische Vorrichtung (100), umfassend mindestens eine erste Bipolarplattenlage (108) und eine zweite Bipolarplattenlage (110), die aus einem metallischen Material oder aus einem auf Kunststoff basierenden Material bestehen und durch eine Schweißnahtanordnung (112) miteinander gefügt sind,
wobei ein erstes Strömungsfeld (144) für ein erstes fluides Medium an der ersten Bipolarplattenlage (108), ein zweites Strömungsfeld für ein zweites fluides Medium an der zweiten Bipolarplattenlage (110) und ein Strömungsfeld für ein drittes fluides Medium zwischen der ersten Bipolarplattenlage (108) und der zweiten Bipolarplattenlage (110) ausgebildet ist und
wobei die erste Bipolarplattenlage (108) eine erste Medium-Durchtrittsöffnung (122) für das erste fluide Medium, einen Fluidverbindungskanal (146) zwischen der ersten Medium-Durchtrittsöffnung (122) und dem ersten Strömungsfeld (144), eine zweite Medium-Durchtrittsöffnung (126) für das zweite fluide Medium und eine dritte Medium-Durchtrittsöffnung (130) für das dritte fluide Medium aufweist,
**dadurch gekennzeichnet,**
**dass** die Schweißnahtanordnung (112) eine erste Mediumkanal-Schweißnaht (170), welche die erste Medium-Durchtrittsöffnung (122) umgibt, eine zweite Mediumkanal-Schweißnaht (172), welche die zweite Medium-Durchtrittsöffnung (126) umgibt, und eine Verbindungs-Schweißnaht (188) umfasst, welche die erste Mediumkanal-Schweißnaht (170) und die zweite Mediumkanal-Schweißnaht (172) kreuzt, wobei
a) die Verbindungs-Schweißnaht (188) mittels einer Schweißenergiequelle (196) erzeugt ist, welcher die erste Bipolarplattenlage (108) während des Schweißvorgangs zugewandt war, und das Schweißnahtende (198) der Verbindungs-Schweißnaht (188) innerhalb des von der ersten Mediumkanal-Schweißnaht (170) umgebenen mediumführenden Bereichs (178) der Bipolarplatte (106) liegt
und/oder
b) die Verbindungs-Schweißnaht (188) die erste Mediumkanal-Schweißnaht (170) und/oder die zweite Mediumkanal-Schweißnaht (172) jeweils mindestens zweimal kreuzt.

2. Bipolarplatte nach Anspruch 1, **dadurch gekennzeichnet, dass** die Verbindungs-Schweißnaht (188) eine Laserschweißnaht ist.

3. Bipolarplatte nach einem der Ansprüche 1 oder 2, **dadurch gekennzeichnet, dass** die Verbindungs-Schweißnaht (188) zumindest abschnittsweise um die dritte Medium-Durchtrittsöffnung (130) herum verläuft.

4. Bipolarplatte nach einem der Ansprüche 1 bis 3, **dadurch gekennzeichnet, dass** die erste Bipolarplattenlage (108) eine Dichtungsanordnung (152) mit einer Strömungsfeld-Dichtlinie (156) aufweist, welche das erste Strömungsfeld (144) umgibt, wobei der Schweißnahtanfang (200) der Verbindungs-Schweißnaht (188) und/oder das Schweißnahtende (198) der Verbindungs-Schweißnaht (188) innerhalb des von der Strömungsfeld-Dichtlinie (156) der Dichtungsanordnung (152) umgebenen Bereichs der Bipolarplatte (106) liegt.

5. Bipolarplatte nach einem der Ansprüche 1 bis 4, **dadurch gekennzeichnet, dass** die erste Bipolarplattenlage (108) eine kathodenseitige Bipolarplattenlage der Bipolarplatte (106) ist.

6. Bipolarplatte nach einem der Ansprüche 1 bis 5, **dadurch gekennzeichnet, dass** das dritte fluide Medium ein Kühlmittel ist.

7. Bipolarplatte nach einem der Ansprüche 1 bis 6, **dadurch gekennzeichnet, dass** ein Schweißnahtende (198) und/oder ein Schweißnahtanfang (200) der ersten Mediumkanal-Schweißnaht (170) außerhalb des von der ersten Mediumkanal-Schweißnaht (170) umgebenen ersten mediumführenden Bereichs (178) der Bipolarplatte (106) und/oder ein Schweißnahtende (198) und/oder ein Schweißnahtanfang (200) der zweiten Mediumkanal-Schweißnaht (172) außerhalb des von der zweiten Mediumkanal-Schweißnaht (172) umgebenen zweiten mediumführenden Bereichs (182) der Bipolarplatte (106) liegt.

8. Bipolarplatte nach einem der Ansprüche 1 bis 7, **dadurch gekennzeichnet, dass** der Schweißnahtanfang (200) der Verbindungs-Schweißnaht (188) innerhalb des von der zweiten Mediumkanal-Schweißnaht (172) umgebenen zweiten mediumführenden Bereichs (182) der Bipolarplatte (106) liegt.

9. Bipolarplatte nach einem der Ansprüche 1 bis 8, **dadurch gekennzeichnet, dass** die Verbindungs-Schweißnaht (188) die zweite Mediumkanal-Schweißnaht (172) mindestens zweimal kreuzt.

10. Bipolarplatte nach einem der Ansprüche 1 bis 9, **dadurch gekennzeichnet, dass** das Schweißnahtende (198) der Verbindungs-Schweißnaht (188) von der nächstliegenden Kreuzungsstelle (202) zwischen der Verbindungs-Schweißnaht (188) und der ersten Mediumkanal-Schweißnaht (170) einen Abstand (S) von mindestens 0,1 mm aufweist und/oder der Schweißnahtanfang (200) der Verbindungs-Schweißnaht (188) von der Kreuzungsstelle (204) zwischen der Verbindungs-Schweißnaht (188) und der zweiten Mediumkanal-Schweißnaht (172) einen Abstand (S') von mindestens 0,1 mm aufweist.

11. Bipolarplatte nach einem der Ansprüche 1 bis 10, **dadurch gekennzeichnet, dass** das Schweißnahtende (198) und/oder der Schweißnahtanfang (200) der ersten Mediumkanal-Schweißnaht (170) einen Abstand (S", S''') von der Kreuzungsstelle (206), an welcher die erste Mediumkanal-Schweißnaht (170) sich selbst kreuzt, aufweist.

12. Bipolarplatte nach einem der Ansprüche 1 bis 11, **dadurch gekennzeichnet, dass** das Schweißnahtende (198) und/oder der Schweißnahtanfang (200) der ersten Mediumkanal-Schweißnaht (170) außerhalb des von der ersten Mediumkanal-Schweißnaht (170) umgebenen ersten mediumführenden Bereichs (178) der Bipolarplatte (106) angeordnet ist.

13. Elektrochemische Vorrichtung, umfassend mehrere elektrochemische Einheiten (104), die längs einer Stapelrichtung (102) aufeinanderfolgen, wobei mindestens eine der elektrochemischen Einheiten (104) eine Bipolarplatte (106) nach einem der Ansprüche 1 bis 12 umfasst.

14. Verfahren zum Herstellen einer Bipolarplatte (106) für eine elektrochemische Vorrichtung (100), nach Anspruch 1, welche mindestens eine erste Bipolarplattenlage (108) und eine zweite Bipolarplattenlage (110) umfasst, wobei ein erstes Strömungsfeld (144) für ein erstes fluides Medium an der ersten Bipolarplattenlage (108), ein zweites Strömungsfeld für ein zweites fluides Medium an der zweiten Bipolarplattenlage (110) und ein drittes Strömungsfeld für ein drittes fluides Medium zwischen der ersten Bipolarplattenlage (108) und der zweiten Bipolarplattenlage (110) ausgebildet ist und
wobei die erste Bipolarplattenlage (108) eine erste Medium-Durchtrittsöffnung (122) für das erste fluide Medium, einen Fluidverbindungskanal (146) zwischen der ersten Medium-Durchtrittsöffnung (122) und dem ersten Strömungsfeld (144), eine zweite Medium-Durchtrittsöffnung (126) für das zweite fluide Medium und eine dritte Medium-Durchtrittsöffnung (130) für das dritte fluide Medium aufweist,
wobei das Verfahren Folgendes umfasst:
- Erzeugen einer Schweißnahtanordnung (112), durch welche die erste Bipolarplattenlage (108) und die zweite Bipolarplattenlage (110) miteinander gefügt sind, mittels einer Schweißenergiequelle (196), wobei die Schweißnahtanordnung (112) eine erste Mediumkanal-Schweißnaht (170), welche die erste Medium-Durchtrittsöffnung (122) umgibt, eine zweite Mediumkanal-Schweißnaht (172), welche die zweite Medium-Durchtrittsöffnung (126) umgibt, und eine Verbindungs-Schweißnaht (188), welche die erste Mediumkanal-Schweißnaht (170) und die zweite Mediumkanal-Schweißnaht (172) kreuzt, umfasst, und
wobei
a) die erste Bipolarplattenlage (108) während des Schweißvorgangs der Schweißenergiequelle (196) zugewandt ist und die Bildung der Verbindungs-Schweißnaht (188) an einem Schweißnahtende (198), das innerhalb des von der ersten Mediumkanal-Schweißnaht (170) umgebenen ersten mediumführenden Bereichs (178) angeordnet ist, beendet wird,
und/oder
b) die Verbindungs-Schweißnaht (188) so gebildet wird, dass sie die erste Mediumkanal-Schweißnaht (170) und/oder die zweite Mediumkanal-Schweißnaht (172) jeweils mindestens zweimal kreuzt.

## Claims

1. Bipolar plate for an electrochemical device (100), comprising at least one first bipolar plate layer (108) and one second bipolar plate layer (110) which are composed of a metallic material or of a material based on plastics and are joined to each other by a weld seam arrangement (112), wherein a first flow field (144) for a first fluid medium is formed on the first bipolar plate layer (108), a second flow field for a second fluid medium is formed on the second bipolar plate layer (110), and a flow field for a third fluid medium is formed between the first bipolar plate layer (108) and the second bipolar plate layer (110), and
wherein the first bipolar plate layer (108) has a first medium passage opening (122) for the first fluid medium, a fluid connecting channel (146) between the first medium passage opening (122) and the first flow field (144), a second medium passage opening (126) for the second fluid medium and a third medium passage opening (130) for the third fluid medium,
**characterized in that**
the weld seam arrangement (112) comprises a first medium channel weld seam (170) which surrounds the first medium passage opening (122), a second medium channel weld seam (172) which surrounds the second medium passage opening (126), and a connecting weld seam (188) which crosses the first medium channel weld seam (170) and the second medium channel weld seam (172), wherein
a) the connecting weld seam (188) is produced by means of a welding energy source (196) which the first bipolar plate layer (108) faced during the welding process, and the weld seam end (198) of the connecting weld seam (188) lies within the medium-conducting region (178) of the bipolar plate (106) which is surrounded by the first medium channel weld seam (170),
and/or
b) the connecting weld seam (188) crosses the first medium channel weld seam (170) and/or the second medium channel weld seam (172) at least twice in each case.

2. Bipolar plate according to Claim 1, **characterized in that** the connecting weld seam (188) is a laser weld seam.

3. Bipolar plate according to either of Claims 1 and 2, **characterized in that** the connecting weld seam (188) runs at least in sections around the third medium passage opening (130).

4. Bipolar plate according to any one of Claims 1 to 3, **characterized in that** the first bipolar plate layer (108) has a sealing arrangement (152) with a flow field sealing line (156) which surrounds the first flow field (144), wherein the weld seam beginning (200) of the connecting weld seam (188) and/or the weld seam end (198) of the connecting weld seam (188) lie/lies within that region of the bipolar plate (106) which is surrounded by the flow field sealing line (156) of the sealing arrangement (152).

5. Bipolar plate according to any one of Claims 1 to 4, **characterized in that** the first bipolar plate layer (108) is a cathode-side bipolar plate layer of the bipolar plate (106).

6. Bipolar plate according to any one of Claims 1 to 5, **characterized in that** the third fluid medium is a coolant.

7. Bipolar plate according to any one of Claims 1 to 6, **characterized in that** a weld seam end (198) and/or a weld seam beginning (200) of the first medium channel weld seam (170) lie/lies outside the first medium-conducting region (178) of the bipolar plate (106) which is surrounded by the first medium channel weld seam (170), and/or a weld seam end (198) and/or a weld seam beginning (200) of the second medium channel weld seam (172) lie/lies outside the second medium-conducting region (182) of the bipolar plate (106) which is surrounded by the second medium channel weld seam (172).

8. Bipolar plate according to any one of Claims 1 to 7, **characterized in that** the weld seam beginning (200) of the connecting weld seam (188) lies within the second medium-conducting region (182) of the bipolar plate (106) which is surrounded by the second medium channel weld seam (172).

9. Bipolar plate according to any one of Claims 1 to 8, **characterized in that** the connecting weld seam (188) crosses the second medium channel weld seam (172) at least twice.

10. Bipolar plate according to any one of Claims 1 to 9, **characterized in that** the weld seam end (198) of the connecting weld seam (188) has a spacing (S) of at least 0.1 mm from the closest crossing point (202) between the connecting weld seam (188) and the first medium channel weld seam (170), and/or the weld seam beginning (200) of the connecting weld seam (188) has a spacing (S') of at least 0.1 mm from the crossing point (204) between the connecting weld seam (188) and the second medium channel weld seam (172).

11. Bipolar plate according to any one of Claims 1 to 10, **characterized in that** the weld seam end (198) and/or the weld seam beginning (200) of the first medium channel weld seam (170) have/has a spacing (S", S'") from the crossing point (206) at which the first medium channel weld seam (170) crosses itself.

12. Bipolar plate according to any one of Claims 1 to 11, **characterized in that** the weld seam end (198) and/or the weld seam beginning (200) of the first medium channel weld seam (170) are/is arranged outside the first medium-conducting region (178) of the bipolar plate (106) which is surrounded by the first medium channel weld seam (170).

13. Electrochemical device, comprising a plurality of electrochemical units (104) which are consecutive along a stacking direction (102), wherein at least one of the electrochemical units (104) comprises a bipolar plate (106) according to any one of Claims 1 to 12.

14. Method for producing a bipolar plate (106) for an electrochemical device (100) according to Claim 1, which bipolar plate comprises at least one first bipolar plate layer (108) and one second bipolar plate layer (110), wherein a first flow field (144) for a first fluid medium is formed on the first bipolar plate layer (108), a second flow field for a second fluid medium is formed on the second bipolar plate layer (110) and a third flow field for a third fluid medium is formed between the first bipolar plate layer (108) and the second bipolar plate layer (110), and
wherein the first bipolar plate layer (108) has a first medium passage opening (122) for the first fluid medium, a fluid connecting channel (146) between the first medium passage opening (122) and the first flow field (144), a second medium passage opening (126) for the second fluid medium and a third medium passage opening (130) for the third fluid medium,
wherein the method comprises the following:
- producing a weld seam arrangement (112), by means of which the first bipolar plate layer (108) and the second bipolar plate layer (110) are joined to each other, by means of a welding energy source (196), wherein the weld seam arrangement (112) comprises a first medium channel weld seam (170) which surrounds the first medium passage opening (122), a second medium channel weld seam (172) which surrounds the second medium passage opening (126), and a connecting weld seam (188) which crosses the first medium channel weld seam (170) and the second medium channel weld seam (172), and
wherein
a) the first bipolar plate layer (108) faces the welding energy source (196) during the welding process, and the formation of the connecting weld seam (188) is ended at a weld seam end (198) which is arranged within the first medium-conducting region (178) that is surrounded by the first medium channel weld seam (170),
and/or
b) the connecting weld seam (188) is formed in such a manner that it crosses the first medium channel weld seam (170) and/or the second medium channel weld seam (172) at least twice in each case.

## Revendications

1. Plaque bipolaire pour un dispositif (100) électrochimique, comprenant au moins une première couche de plaque bipolaire (108) et une deuxième couche de plaque bipolaire (110), qui sont constituées d'un matériau métallique ou d'un matériau à base de matière plastique et sont assemblées entre elles par un ensemble de cordons de soudure (112),
dans laquelle un premier champ d'écoulement (144) pour un premier milieu fluide est réalisé sur la première couche de plaque bipolaire (108), un deuxième champ d'écoulement pour un deuxième milieu fluide est réalisé sur la deuxième couche de plaque bipolaire (110) et un champ d'écoulement pour un troisième milieu fluide est réalisé entre la première couche de plaque bipolaire (108) et la deuxième couche de plaque bipolaire (110), et
dans laquelle la première couche de plaque bipolaire (108) présente une première ouverture de passage de milieu (122) pour le premier milieu fluide, un canal de liaison fluidique (146) entre la première ouverture de passage de milieu (122) et le premier champ d'écoulement (144), une deuxième ouverture de passage de milieu (126) pour le deuxième milieu fluide et une troisième ouverture de passage de milieu (130) pour le troisième milieu fluide,
**caractérisée en ce**
**que** l'ensemble de cordons de soudure (112) comprend un premier cordon de soudure de canal de milieu (170), lequel entoure la première ouverture de passage de milieu (122), un deuxième cordon de soudure de canal de milieu (172), lequel entoure la deuxième ouverture de passage de milieu (126), et un cordon de soudure de liaison (188), lequel croise le premier cordon de soudure de canal de milieu (170) et le deuxième cordon de soudure de canal de milieu (172), dans laquelle
a) le cordon de soudure de liaison (188) est produit au moyen d'une source d'énergie de soudure (196), vers laquelle la première couche de plaque bipolaire (108) était tournée pendant l'opération de soudage, et l'extrémité de cordon de soudure (198) du cordon de soudure de liaison (188) se situe à l'intérieur de la zone de guidage de milieu (178), entourée par le premier cordon de soudure de canal de milieu (170), de la plaque bipolaire (106)
et/ou
b) le cordon de soudure de liaison (188) croise le premier cordon de soudure de canal de milieu (170) et/ou le deuxième cordon de soudure de canal de milieu (172) respectivement au moins deux fois.

2. Plaque bipolaire selon la revendication 1, **caractérisée en ce que** le cordon de soudure de liaison (188) est un cordon de soudure au laser.

3. Plaque bipolaire selon l'une quelconque des revendications 1 ou 2, **caractérisée en ce que** le cordon de soudure de liaison (188) s'étend au moins par endroits tout autour de la troisième ouverture de passage de milieu (130).

4. Plaque bipolaire selon l'une quelconque des revendications 1 à 3, **caractérisée en ce que** la première couche de plaque bipolaire (108) présente un ensemble d'étanchéité (152) avec une ligne étanche de champ d'écoulement (156), laquelle entoure le premier champ d'écoulement (144), dans laquelle le début de cordon de soudure (200) du cordon de soudure de liaison (188) et/ou l'extrémité de cordon de soudure (198) du cordon de soudure de liaison (188) se situent à l'intérieur de la zone, entourée par la ligne étanche de champ d'écoulement (156) de l'ensemble d'étanchéité (152), de la plaque bipolaire (106).

5. Plaque bipolaire selon l'une quelconque des revendications 1 à 4, **caractérisée en ce que** la première couche de plaque bipolaire (108) est une couche de plaque bipolaire côté cathode de la plaque bipolaire (106).

6. Plaque bipolaire selon l'une quelconque des revendications 1 à 5, **caractérisée en ce que** le troisième milieu fluide est un liquide de refroidissement.

7. Plaque bipolaire selon l'une quelconque des revendications 1 à 6, **caractérisée en ce qu'**une extrémité de cordon de soudure (198) et/ou un début de cordon de soudure (200) du premier cordon de soudure de canal de milieu (170) se situent à l'extérieur de la première zone de guidage de milieu (178), entourée par le premier cordon de soudure de canal de milieu (170), de la plaque bipolaire (106) et/ou une extrémité de cordon de soudure (198) et/ou un début de cordon de soudure (200) du deuxième cordon de soudure de canal de milieu (172) se situent à l'extérieur de la deuxième zone de guidage de milieu (182), entourée par le deuxième cordon de soudure de canal de milieu (172), de la plaque bipolaire (106).

8. Plaque bipolaire selon l'une quelconque des revendications 1 à 7, **caractérisée en ce que** le début de cordon de soudure (200) du cordon de soudure de liaison (188) se situe à l'intérieur de la deuxième zone de guidage de milieu (182), entourée par le deuxième cordon de soudure de canal de milieu (172), de la plaque bipolaire (106).

9. Plaque bipolaire selon l'une quelconque des revendications 1 à 8, **caractérisée en ce que** le cordon de soudure de liaison (188) croise le deuxième cordon de soudure de canal de milieu (172) au moins deux fois.

10. Plaque bipolaire selon l'une quelconque des revendications 1 à 9, **caractérisée en ce que** l'extrémité de cordon de soudure (198) du cordon de soudure de liaison (188) présente par rapport à l'emplacement de croisement (202) situé le plus proche entre le cordon de soudure de liaison (188) et le premier cordon de soudure de canal de milieu (170) un espacement (S) d'au moins 0,1 mm, et/ou le début de cordon de soudure (200) du cordon de soudure de liaison (188) présente par rapport à l'emplacement de croisement (204) entre le cordon de soudure de liaison (188) et le deuxième cordon de soudure de canal de milieu (172) un espacement (S') d'au moins 0,1 mm.

11. Plaque bipolaire selon l'une quelconque des revendications 1 à 10, **caractérisée en ce que** l'extrémité de cordon de soudure (198) et/ou le début de cordon de soudure (200) du premier cordon de soudure de canal de milieu (170) présentent un espacement (S", S''') par rapport à l'emplacement de croisement (206), sur lequel le premier cordon de soudure de canal de milieu (170) se croise lui-même.

12. Plaque bipolaire selon l'une quelconque des revendications 1 à 11, **caractérisée en ce que** l'extrémité de cordon de soudure (198) et/ou le début de cordon de soudure (200) du premier cordon de soudure de canal de milieu (170) sont disposés à l'extérieur de la première zone de guidage de milieu (178), entourée par le premier cordon de soudure de canal de milieu (170), de la plaque bipolaire (106).

13. Dispositif électrochimique, comprenant plusieurs unités (104) électrochimiques, qui se suivent les unes les autres le long d'une direction d'empilement (102), dans lequel au moins une des unités (104) électrochimiques comprend une plaque bipolaire (106) selon l'une quelconque des revendications 1 à 12.

14. Procédé pour fabriquer une plaque bipolaire (106) pour un dispositif (100) électrochimique selon la revendication 1, laquelle comprend au moins une première couche de plaque bipolaire (108) et une deuxième couche de plaque bipolaire (110), dans lequel un premier champ d'écoulement (144) pour un premier milieu fluide est réalisé sur la première couche de plaque bipolaire (108), un deuxième champ d'écoulement pour un deuxième milieu fluide est réalisé sur la deuxième couche de plaque bipolaire (110) et un troisième champ d'écoulement pour un troisième milieu fluide est réalisé entre la première couche de plaque bipolaire (108) et la deuxième couche de plaque bipolaire (110) et
dans lequel la première couche de plaque bipolaire (108) présente une première ouverture de passage de milieu (122) pour le premier milieu fluide, un canal de liaison fluidique (146) entre la première ouverture de passage de milieu (122) et le premier champ d'écoulement (144), une deuxième ouverture de passage de milieu (126) pour le deuxième milieu fluide et une troisième ouverture de passage de milieu (130) pour le troisième milieu,
dans lequel le procédé comprend ce qui suit :
- la production d'un ensemble de cordons de soudure (112), par lequel la première couche de plaque bipolaire (108) et la deuxième couche de plaque bipolaire (110) sont assemblées entre elles, au moyen d'une source d'énergie de soudage (196), dans lequel l'ensemble de cordons de soudure (112) comprend un premier cordon de soudure de canal de milieu (170), lequel entoure la première ouverture de passage de milieu (122), un deuxième cordon de soudure de canal de milieu (172), lequel entoure la deuxième ouverture de passage de milieu (126), et un cordon de soudure de liaison (188), lequel croise le premier cordon de soudure de canal de milieu (170) et le deuxième cordon de soudure de canal de milieu (172), et
dans lequel
a) la première couche de plaque bipolaire (108) est tournée pendant l'opération de soudage vers la source d'énergie de soudage (196) et la formation du cordon de soudure de liaison (188) se termine sur une extrémité de cordon de soudure (198), qui est disposée à l'intérieur de la première zone de guidage de milieu (178) entourée par le premier cordon de soudure de canal de milieu (170),
et/ou
b) le cordon de soudure de liaison (188) est formé de telle sorte qu'il croise le premier cordon de soudure de canal de milieu (170) et/ou le deuxième cordon de soudure de canal de milieu (172) respectivement au moins deux fois.
